# EUROPEAN PATENT APPLICATION

(11) **EP 4 838 406 A1**
(43) Date of publication of application: **11.11.2026**
(21) Application number: 25192504.6
(22) Date of filing: 29.07.2025
(51) Int. Cl.: G06K 7/10, G06K 19/07, H04B 5/70

(54) **LISTEN DEVICE AND METHOD FOR NEAR FIELD COMMUNICATION**

(30) Priority: 08.05.2025 IN 202541044510
(71) Applicant: NXP B.V., 5656 AG Eindhoven (NL)
(72) Inventor: Bukovjan, Peter, 5656AG Eindhoven (NL); Schreiner, Arnaud, 5656AG Eindhoven (NL); Joshi, Shankar, 5656AG Eindhoven (NL); Srinivas, Deepak, 5656AG Eindhoven (NL)
(74) Representative: Krott, Michel

(57) **Abstract**

There is disclosed a method of near field communication for a listen device with a volatile and a non-volatile memory. The listen device is configured to communicate with a reader device through read operations and write operations, comprising of one or more read/write commands. The non-volatile memory comprises an initial NDEF message. NDEF records are provided as service parameter records from the non-volatile memory to the reader device. Parts of the initial NDEF message are copied from the non-volatile to the volatile memory. Then the copy is overlayed over the initial NDEF message, such that the reader device reads and writes data from or to the copy in the volatile memory. Further a listen device and a computer readable storage for programming a listen device are disclosed.

## Description

### TECHNICAL FIELD

The present disclosure relates to near field communication, NFC, and in particular to the NFC data exchange format, NDEF, and the tag NDEF exchange protocol, TNEP.

### TECHNICAL BACKGROUND

TNEP was initially introduced for devices, e.g. mobile devices like smart phones in the card emulation mode, to establish a connection handover from NFC protocol to a different wireless communication protocol, e.g. Bluetooth or Wi-Fi, in order to retrieve documents, like a driving license located on the mobile device. TNEP can also be used for other use-cases than a connection handover, which requires bi-directional data exchange between a listen device and a reader device.

Listen devices can be implemented in a variety of alternatives. Examples are NFC tags, which are devices that may have an integrated circuit and an antenna. They may not require a dedicated power source and can be powered by an electromagnetic field provided by a reader device. NFC tags can be embodied by NFC stickers, NFC cards, NFC fobs, or even by another, possibly powered device, like a smart phone or laptop, with an additional NFC arrangement.

Reader devices can be implemented as dedicated NFC readers, smart phone or laptop with NFC reading capability, or a specialized terminal, e.g. a check-out register, with an additional NFC reading arrangement. Readers are powered devices, which can provide the listen device with the power to operate.

NFC is used in a variety of applications, e.g. home automation, assembly line production, case file locating, contactless payment, public or private libraries, inventory management, etc.

### SUMMARY OF THE DISCLOSURE

TNEP is based on legacy NDEF operation, but with current implementations, deficiencies are present. Existing NDEF messages are static in nature and stored in non-volatile memory. With currently defined NDEF operation, in response to a read operation from a reader device, reading from the NDEF message, listen devices respond with the content of the non-volatile memory. For a write operation to the NDEF message, listen devices write to the corresponding locations in the non-volatile memory.

Listen devices can comprise information, which can e.g. be stored in a memory element of the listen device. An example of such information is an NDEF message, which can be stored on a listen device, and in the NDEF records that make up the NDEF message, information can be stored like a website URL, contact information, like a virtual business card, Wi-Fi credentials or other information to contact a person or interact with a website. The information of the NDEF message can also be overwritten if not locked.

In a standard NDEF read operation from the NDEF message, the listen device responds with the content of the non-volatile memory. On the following write operation to the NDEF message, the listen device can write to corresponding locations in the non-volatile memory.

In the context of TNEP, the first NDEF Message within the NDEF Message exchange is called initial NDEF Message and overwriting it may cause a problem. If information, which is received from the reader device, is written to the tag device, i.e. into the tag device memory, the initial information is lost or partly lost. This may affect the functionality of the tag device, since overwriting of the initial NDEF message content may result in only one-time usable listen device.

Listen devices can operate in so-called communications contexts. A TNEP communication context corresponds to the steps within the NDEF Message exchange as part of TNEP.

Moreover, according to current implementations, listen devices cannot react depending on the TNEP communication context, since only one NDEF message exists, namely in the non-volatile memory, and the written NDEF Message is not interpreted by the listen device. Therefore, listen devices cannot be reactive to communication, they can only provide the current contents of the memory as stored within the listen device.

Listen devices with enhanced functionality are known, but only as active listen devices, i.e. with a dedicated power source. E.g. smart phones can serve as listen devices.

Therefore, there may be a need to provide improved listen devices with embedded memory management and corresponding methods that overcome the deficiencies of the prior art.

The presented solution is beneficial over the prior art, since the initial NDEF message is maintained after service execution. Further the listen device can re-execute the service seamlessly and it is possible to read-back the intermediate written data during the steps of TNEP service. Further the NDEF content in the non-volatile memory is not overwritten, and at any point in the TNEP protocol the written data can be read back.

Another benefit is that the listen device can respond significantly faster to the write command for writing the NDEF message, or a part thereof, i.e. one or more NDEF records, into the volatile memory, since writing to volatile memory is significantly faster than writing to the non-volatile memory, for example when the TNEP service is not enabled.

Moreover, writing into volatile memory is also more energy efficient, which can be seen in that there are no power spikes indicating writing to the non-volatile memory in an oscilloscope, once NDEF write operation to the volatile memory is triggered after TNEP service is enabled.

According to an aspect of the present disclosure, it is described a method of near field communication, NFC, for a listen device with a volatile memory and a non-volatile memory. The listen device is configured to communicate with a reader device through read operations and write operations. A read operation consists of one or more read commands and a write operation consists of one or more write commands. The non-volatile memory comprises an initial NFC data exchange format, NDEF, message, which consists of one or more NDEF records. The method comprises providing, in a first read operation, one or more of the NDEF records as service parameter records from the non-volatile memory to the reader device. The service parameter records comprise information about available services of the listen device and are stored within the initial NDEF message. The method further comprises producing a copy of at least a part of the initial NDEF message from the non-volatile memory to the volatile memory. The method then comprises overlaying the copy in the volatile memory over the initial NDEF message in the non-volatile memory. Thereby subsequent read operations from the reader device read data from the copy in the volatile memory and subsequent write operations from the reader device write data to the copy in the volatile memory.

According to another aspect of the present disclosure, it is described a listen device for near field communication, NFC, with a reader device through read operations comprising one or more read commands and write operations comprising one or more write commands. The listen device comprises a volatile memory, a non-volatile memory comprising an initial NFC data exchange format, NDEF, message having one or more NDEF records, and a finite state machine, FSM. The listen device is configured to provide, in a first read operation, one or more of the NDEF records as service parameter records from the non-volatile memory to the reader device, the service parameter records comprising information about available services of the listen device based on the initial NDEF message. The device is further configured to produce a copy of at least a part of the initial NDEF message from the non-volatile memory to the volatile memory. The device is further configured to overlay the copy in the volatile memory over the initial NDEF message in the non-volatile memory, such that subsequent read operations from the reader device read data from the copy in the volatile memory, and subsequent write operations from the reader device write data to the copy in the volatile memory.

According to another aspect of the present disclosure, it is described a non-transitory computer-readable storage medium having stored thereon instructions that, when executed by at least one processor of a computer system, cause the processor to program a listen device in communication with the computer system into a configuration that enables the listen device to carry out the described method.

By the aforementioned features, the reading of the initial NDEF message is executed on the non-volatile memory. The listen device copies part of the NDEF message from the non-volatile memory to the volatile memory and overlays the copy over the initial NDEF message. With this overlaying, which is also called mirroring, subsequent NDEF read and write operations are performed with the volatile memory instead of the non-volatile memory. For read and write operations, the listen device operates on the content stored in the volatile memory. By employing this technique, the reader device - and the user - cannot determine any difference to other listen tags, i.e. without a volatile memory, and it appears to the reader device that the NDEF content is being overwritten. However, with this provided technique, the content of the non-volatile memory, i.e. the initial NDEF message, is not changed. This results in a listen device that can be reused with the exact same initial status.

By employing the non-volatile memory and the volatile memory of the listen device as laid out above, the listen devices can be reused after the overlaying of the volatile memory is stopped, and also the TNEP context can be maintained during the communication with the reader device. With the proposed solution, the first read operation reads the initial NDEF message from the non-volatile memory of the listen device. As soon as a write command is detected, the listen device copies at least a part of the NDEF message from the non-volatile memory to the volatile memory. Subsequent read and write operations are then executed on the volatile memory. In particular, a read after write operation may be employed to read a specific NDEF address location. The listen device then responds with the written content from the volatile memory. Therefore, the process is transparently perceived by the reader as if the NDEF content is being overwritten whereas the non-volatile memory NDEF content is undisturbed. This solves the problem of overwriting of the initial NDEF message content which results in only one-time usable listen devices.

In the context of this document, the expressions overlaying, shadowing, and mirroring, e.g. mirroring a value into a dedicated memory block or mirroring data over other data or memory, or overlaying one memory with another memory, has the following meaning.

The expression memory B is overlayed over memory A, has the same meaning as mirroring memory B over memory A or shadowing memory B over memory A. Each expression means that actual memory content in that block, data, or memory which is the underlying memory, i.e. memory A is maintained unchanged. This means that in accessing the block, data, or memory of memory A by reading or writing the mirrored value of memory B or its data is read or written instead of the actual data or value in the actual memory A. More than two layers or memory can exist at the same time, where the last memory to be introduced is accessed instead of the other layers. A layer can also be introduced for read or write operations only, such that e.g. for reading a memory layer C is used, while write operations still use memory layer B. It is noted that a memory layer can also be introduced for some information only, and other information can still be read from the other layers, which lay below the most top layer.

As an example, a reading device reads a natural number stored at a certain memory address. In this example, the natural number 7 is stored at that memory address. Reading from the memory address will result in the data or value 7. Now a particular value of 3, for example, is mirrored over the memory with the aforementioned memory address. Reading at the memory address will now result in the value 3. In the same manner, writing is possible. If a new value, e.g. 5, is written into a memory under a certain address, which is mirrored over, then the value is the underlying memory, i.e. 7, is not overwritten.

The aspects defined above, and further aspects of the disclosure are apparent from the examples of embodiment to be described hereinafter and are explained with reference to these examples of embodiment. The disclosure will be described in more detail hereinafter with reference to examples of embodiment, but to which the disclosure is not limited.

According to an embodiment further the method comprises, or the device is configured to write, in response to receiving, from the reader device, a complete first write command comprising a service select record, at least a part of the service select record to the volatile memory. The full service select record is written to the volatile memory in response to receiving, from the reader device one or more subsequent write commands. In response to writing the full service select record to the volatile memory, the device determines the validity of the full service select record. And in response to determining the validity, confirmation of the validity of the service select record is provided to the reader device in a subsequent read operation from mirrored data overlaying the non-volatile memory as a TNEP status record. The TNEP status record is sometimes also referred to as acknowledgement. Then, in a subsequent write operation to the volatile memory, a service request record for a selected service is received from the reader device. Based on at least the service request record the service response record is constructed and provided to the reader device in another subsequent read operation from mirrored data overlaying the non-volatile memory.

Thereby, the other parts of TNEP based communication are performed, and the full usage of a listen device is achieved.

According to a further embodiment some or all of the following information, which is provided to the reader device are either copied to the volatile memory or overlayed as another layer over the volatile memory. This can be achieved with the confirmation of the validity of the service select record, which - as the TNEP status record - can either be copied to the volatile memory to be read from there, or the TNEP status record can be provided to the corresponding read operation as another overlay layer over the volatile memory. The same applies to the service response record, which can either be copied to the volatile memory to be read from there, or overlayed as another layer over the volatile memory.

According to a further embodiment, a service deselect record is received in one of the subsequent write operations. In response thereto, the overlying of the volatile memory over the initial NDEF message in the non-volatile memory can be deactivated.

By deactivating the overlay if the used service is deselected, the tag effectively returns to the initial state and can be reused in the initial state, i.e. the services provided by the tag device can be selected and executed again, by the same or another reader device.

According to a further embodiment, the received service request record is validated by comparing the service request record that is received with other data. This other data can be stored in the volatile memory, in the non-volatile memory, or even in the finite state machine, e.g. coded in the netlist of the finite state machine. Then the construction of the service response record can also be based on the result of the comparing.

Thereby the service response record can be different for valid service request records and invalid service request records, which allows improved operation of the listen device.

According to a further embodiment, writing one or more of the write commands in the TNEP communication context at least partly overwrite the contents of the volatile memory.

By partly overwriting the volatile memory, information from write operations can be stored and used to generate responses.

According to a further embodiment, the listen device is configured to change the context of the FSM based on the contents of the volatile memory.

To keep track of the TNEP communication context, also called TNEP state, a finite state machine or similar structure can be implemented. The written NDEF message is then interpreted by the listen device and the context of the FSM can be switched to a next TNEP state based on the current TNEP state, i.e. the contents of the volatile memory. NDEF responses, which are to be read by the reader device, are constructed using relevant content from the non-volatile memory, the volatile memory content and fixed content, e.g. hardcoded, based on the TNEP state. The constructed NDEF message is then mirrored over the volatile memory content in a way that subsequent read operation is reading the mirrored data. Thereby, the listen device can react depending on the TNEP communication context.

According to a further embodiment, the listen device is configured to change the context of the FSM only based on validated contents of the volatile memory.

### BRIEF DESCRIPTION OF THE DRAWINGS

Figure 1 shows schematic configurations of a reader device and a listen device according to an exemplary embodiment of the disclosure.
Figure 2 shows a flow chart illustrating a method according to an exemplary embodiment of the disclosure.
Figure 3 illustrates a data flow diagram according to an exemplary embodiment of the disclosure.
Figure 4 shows an exemplary implementation of a finite state machine according to an exemplary embodiment of the disclosure.

### DETAILED DESCRIPTION OF THE DRAWINGS

The listen device can interpret the NDEF message, which is stored within the volatile memory and can mirror an expected result into subsequent NDEF messages. The listen device can be implemented with a finite state machine, FSM, or similar structure to keep track of the TNEP communication context, i.e. TNEP state. Similar structure refers to a program or a piece of software code that does provide the same function as an FSM on a processor- or a computer-based listen device.

This allows the listen device to keep track of the TNEP communication context, i.e. TNEP state. This can be implemented by a circuit, like an integrated circuit implementing a finite state machine, FSM, or similar structure. For a FSM, the interpretation of the written NDEF message by the listen device causes the FSM to switch to the next TNEP state based on the current TNEP state. Then the listen device constructs the NDEF response, which is to be read by the reader, e.g. a mobile phone, using relevant content from the non-volatile memory, from the volatile memory and even possibly fixed content, and based on the TNEP state. The constructed NDEF message is then mirrored over the non-volatile memory content in a way that the subsequent read operation is reading the mirrored data. By overlaying the constructed NDEF Message over the non-volatile memory makes it indiscernible for the reader from other listen devices, i.e. the perception of the reader is that the response is provided from the non-volatile memory, as with other listen devices.

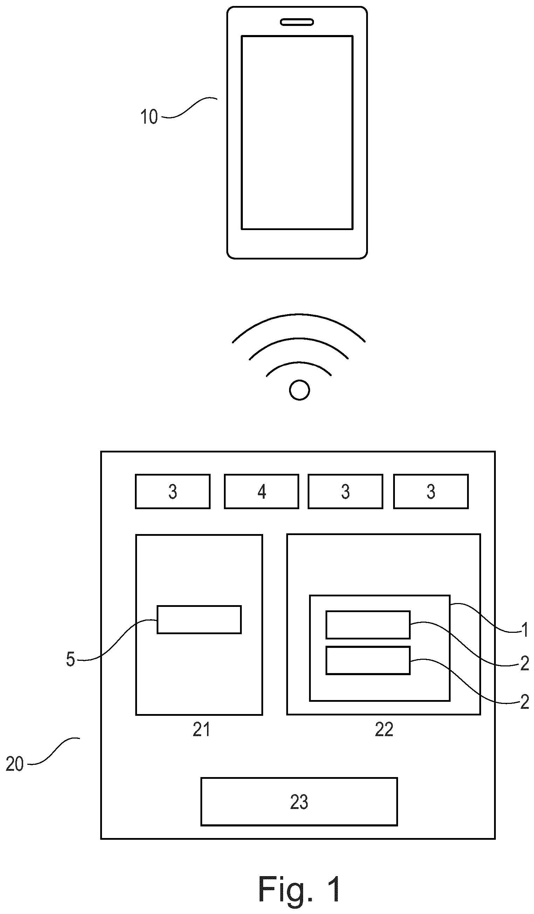

First, the devices will briefly be described on the basis of Fig. 1. A reader device 10 is shown, without loss of generality, the reader device is depicted as a smart phone. As stated above, reader devices can be implemented as dedicated NFC readers, smart phone or laptop with NFC reading capability, or a specialized terminal, e.g. a check-out register, with an additional NFC reading arrangement. Readers are generally powered devices, which can provide the listen device with the power to operate.

Fig. 1 shows schematic configurations of a reader device 10 and a listen device 20 according to an exemplary embodiment of the disclosure. In particular, Fig. 1 shows reader device 10 to be in NFC communication, by using a wireless connection symbol, with the listen device 20. NFC technology is very short ranged and based on contactless connection technologies. The range of NFC is often indicated with a few centimetres, where in practice NFC works reliably only in distances of up to 10 cm. Also, NFC may be encrypted, whereby the security can be significantly enhanced.

Listen device 20 may be an NFC tag, which is a device with an integrated circuit 23 containing FSM 23 or processor 23 and an antenna, which is not shown. Alternative listen devices may also be implemented as an active device with a dedicated power source.

Listen device 20 comprises a non-volatile memory 22, in which an initial NDEF message 1 is stored. The NDEF message comprises of NDEF records 2, which can be assigned to one or more services 3, that the listen device can offer. In Fig. 1 two NDEF records 2 are shown, but any number can be stored in the NDEF message, depending on the services 3 the listen device 20 offers. One of the services 4 is the selected service that the reader device 10 has selected, which will be discussed in detail below.

Listen device 20 also comprises a volatile memory 21, in which a copy 5 of at least a part of the NDEF message can be stored. In Fig. 1 only one copy 5 is shown, but any number of parts, e.g. records of the NDEF message can be copied to the volatile memory 21.

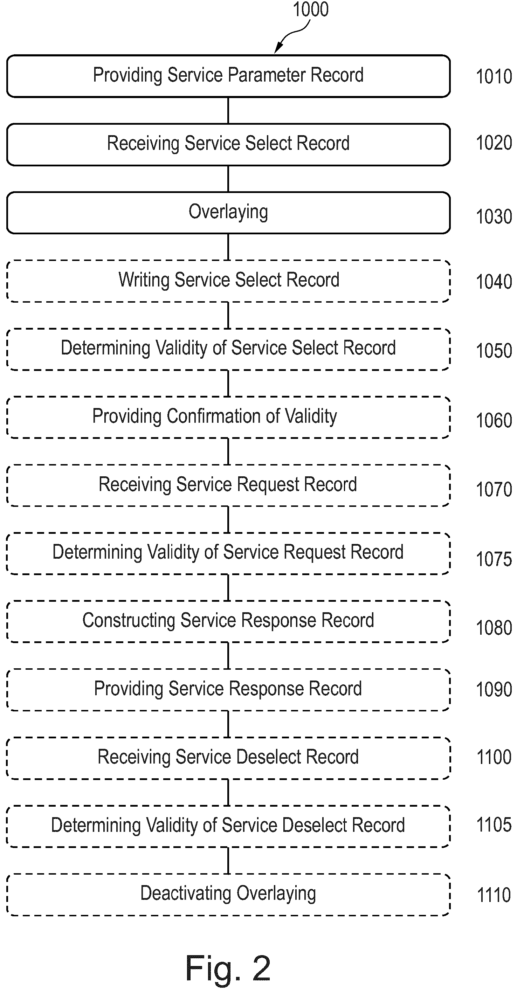

Fig. 2 shows a flow chart illustrating a method 1000 according to an exemplary embodiment of the disclosure. Method 1000 is a method of near field communication, NFC, for a listen device 20 with a volatile memory 21 and a non-volatile memory 22. The non-volatile memory 22 comprises an initial NFC data exchange format, NDEF, message 1 having one or more NDEF records 2. The listen device 20 is configured to communicate with a reader device 10 through read operations comprising one or more read commands and write operations comprising one or more write commands.

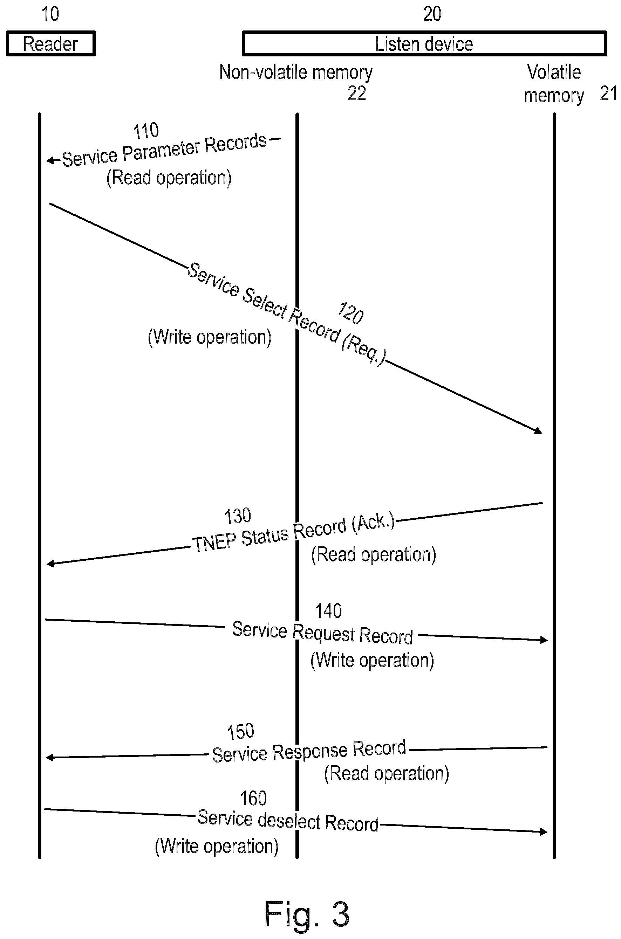

Fig. 3 illustrates a data flow diagram according to an exemplary embodiment of the disclosure. Method 1000 will now be described in detail on the basis of Figs. 2 and 3.

The method 1000 starts with providing 1010, in a first read operation, one or more of the NDEF records 2 as service parameter records 110 from the non-volatile memory 22 to the reader device 10. The service parameter records 110 comprising information about available services 3 of the listen device 20 based on the initial NDEF message 1. Just like with other NFC tags, the reader can read from the listen device, which services are available. This information is provided by the listen device 20 from the non-volatile memory 22. Since this information is from the non-volatile memory 22, this information is the same for every time the listen device 20 is used to execute selected service.

The service parameter records 110 about available services 3 can be provided to the reader device 10 in a read operation according to the tag NDEF exchange protocol, TNEP. As can be seen in Fig. 3 the service parameter records 110 are read from the non-volatile memory 22, as it is the same for each use of the listen device 20.

A copy 5 of at least a part of the initial NDEF message 1 is produced 1020 from the non-volatile memory 22 to the volatile memory 21.

It should be noted that the copy of the initial NDEF message can be produced at any time. One implementation can include producing the copy as soon as an incoming first write command from the reader device 10 is detected and in response thereto. As stated above, a write operation - like a read operation - can comprise one or more write commands, which are delivered sequentially from the reader device 10 to the listen device 20. However, producing the copy 5 may start as soon as an incoming write command is detected. The first write command may comprise the service select record 120, as can be seen in Fig. 3.

Another implementation can include starting the copy of the NDEF message from the non-volatile memory 22 to the volatile memory 21 already before communication with the reader device 10 is initiated, and thus before providing 1010 the service parameter records 110 to the reader device 10. Consequently, the subsequent overlaying 1030 of the non-volatile memory 22 overlay with the volatile memory 21, which is detailed below, can also start earlier, e.g. right after the listen device 20 is starting, and before providing 1010 the service parameter records 110 to the reader device 10.

Method 1000 then proceeds to overlaying 1030 the copy 5 in the volatile memory 21 over the initial NDEF message 1 in the non-volatile memory 22, as detailed above. Thereby subsequent read operations from the reader device 10 read data from the copy 5 in the volatile memory 21 instead of the initial NDEF message 1 from the non-volatile memory 22, and the same applies to the subsequent write operations from the reader device 10.

With this method, the listen device 20 is not discernible for the reader device 10, to which the listen device 20 according to this disclosure is operating totally transparently.

According to an embodiment, the method proceeds with at least one of the following steps:

Writing 1040 at least a part of the service select record 120 to the volatile memory 21 in response to receiving from the reader device 10 the complete first write command, which comprises at least a part of a service select record 120. The write operation that writes the service select record 120 can comprise one or more write commands. And while the production of the copy 5 may be started in response to detecting the first write command, the first write command alone might not contain the full service select record. However, the part of the service select record 120 that is comprised in the first write command can already be written to the volatile memory as soon as the first write command is completely received and the step of copying is finished.

Writing 1040 the full service select record 120 to the volatile memory 21 can be performed in response to receiving from the reader device 10 one or more subsequent write commands. By receiving all write commands that - together - comprise the full service select record 120, the listen device 20 can write the service select record 120 to the volatile memory 21. By writing the service select record 120 to the volatile memory 21, possibly some of the contents in the volatile memory 21 is overwritten.

As soon as the full service select record 120 is written to the volatile memory 21, the listen device 20 can, in response thereto, determine the validity of the full service select record 120 in step 1050.

Further, in response to this determination of the validity of the full service select record 120, the listen device can provide in step 1060 a confirmation of the validity of the service select record 120 to the reader device 10. This confirmation can be provided in a subsequent read operation as a TNEP status record 130.

Thereafter, one of the available services 3 of the listen device 20 is the selected service 4. And the listen device can proceed with receiving 1070, in a subsequent write operation to the volatile memory 21, a service request record 140 for the selected service 4 from the reader device 10.

The listen device 20 then can construct, in step 1080, a service response record 150 based on at least the service request record 140. Other data, already available in the listen device or received from the reader device, can have an influence on the service response record 150. For example, information from the service select record 120, the selected service 4 or even unrelated information like a current time and date, if transmitted from the reader device 10, can have an impact on the construction of the service response record 150.

The constructed service response record 150 is then, in step 1090, provided to the reader device 10 in another subsequent read operation.

It is noted that all read and write operations following the overlaying 1030 are performed on the volatile memory 21, which is overlayed over the non-volatile memory 22. Some read operations might happen even from another overlay layer over the volatile memory 21. Thereby the contents of the non-volatile memory 22 is protected from overwriting.

The confirmation of the validity, i.e. the TNEP status record 130, in step 1060 and the service response record 150 in step 1090, can therein be copied to the volatile memory 21 and provided to the reader device 10 from there. Alternatively, they can be provided in another overlay layer over the volatile memory 21, effectively creating a three-layered data structure. Only one of them can be provided in this manner or both in the same or in different alternatives.

The listen device 20 can further validate the received service request record 140, for example by comparing 1075 the service request record 140 with other data. This other data, which is the basis for the comparison can be stored in the volatile memory 22, in the non-volatile memory 21, or even in the finite state machined 23, e.g. coded in the netlist of the finite state machine. The construction 1080 can then be also based on the result of the comparison 1075.

Also, the listen device 20 can receive in step 1100 a service deselect record 160 from the reader device 10 in one of the subsequent write operations. In response thereto the listen device 20 can deactivate the overlying of the volatile memory 21 over the initial NDEF message 1 in the non-volatile memory 22 in step 1110. Thereby the listen device 20 can return to the initial state and is ready for the next use. As stated before, any of the write commands can at least partly overwrite the contents of the volatile memory.

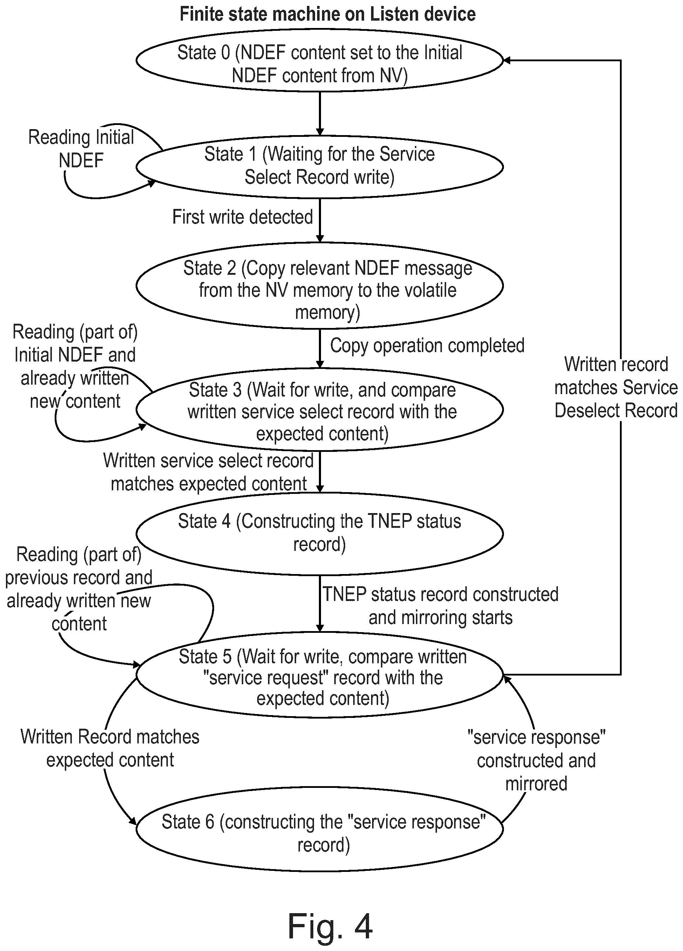

Fig. 4 shows an exemplary implementation of a finite state machine, FSM, according to an exemplary embodiment of the disclosure. As stated above, the listen device 20 can be implemented by a circuit, like an integrated circuit, a finite state machine, or similar structure. For a FSM, the interpretation of the written NDEF message by the listen device causes the FSM to switch to the next TNEP state based on the current TNEP state. Fig. 4 comprises optional, exemplary and alternatives features, and is merely given for a better understanding of the described subject-matter.

The FSM starts in state 0, where NDEF read operation of service select parameter record from non-volatile memory 22, or in other words, the NDEF content of the listen device 20 is set to the initial NDEF message 1 from the non-volatile memory 22. The FSM then progresses to state 1,

In state 1, the FSM is waiting for the service select record 120 write operation. In this state, a reader device 10 can read the initial NDEF message 1 from the non-volatile memory 22. Once the reader device 10 identifies valid Service Parameter record 110 the reader device 10 selects the service 4 by writing the service select record 120 to the listen device 20.

Upon detecting a first write operation, i.e. the service select record 120, the FSM progresses to state 2 and the listen device writes the NDEF message, or more particularly the copy 5 of the NDEF records, to the volatile memory 21, by copying the NDEF records 2, thereby overlaying the initial NDEF message 1 stored in the non-volatile memory 22. As stated above, the copying may also start without the detection of the first write operation, i.e. already when the listen device 20 is starting.

By overlaying, the parts of NDEF message 1 that are copied to the volatile memory 21 are primarily used. A fallback technique to the initial NDEF message 1 can be used, if a part of the NDEF record is requested that was not copied to a copy 5, and if general or fixed information is requested, it can also be acquired from the non-volatile memory 22. Once a valid service select record 120 is written, i.e. after the copy 5 has been produced to the volatile memory 21, the FSM progresses to state 3.

In state 3, any read operation from a reader device 10 could read NDEF records 2 from the non-volatile memory 22 as well as from the copy 5 in the volatile memory 21. The FSM can compare incoming write operations from the reader device 10 and compares it with the expected content, i.e. the predefined valid requests for the selected service 4. The FSM progresses to state 4.

In state 4, the listen device 20 constructs and mirrors TNEP status record 130 and progresses to state 5. In state 5, the reader device 10 can read the TNEP status record 130 and write subsequent record, e.g. a service request record 140. The listen device 20 waits for the service request record 140 and can compare any incoming write operation with valid predefined service request records for the selected service 4. In this state the reader device 10 can read the previous records or parts thereof and also already write new content.

If the listen device 20 receives a valid service request record 140 from a reader device 10, it progresses to state 6 and constructs a service response record 150 and mirrors it in a way that the reader device 10 can read it, after which the FSM returns to state 5.

If the incoming write operation is a service deselect record 160, the listen device can stop overlaying of the volatile memory 21 over the non-volatile memory 22 and return to state 0. With the service deselect record 160, the reader device 10 can finish the current execution of the selected service 4 and send the listen device 20 back to the initial NDEF read status, which is the state 0 followed by state 1 to get ready for accepting a next service request record. The next service request record 140 can then refer to the same selected service 4, or a different service of the available services 3.

As a practical example, a listen device 20 offering an authentication service 3 (or 4 since it will be the selected service 4 soon) needs to be authenticated. The reader device 10, e.g. mobile phone, is placed over the listen device 20, thereby brought into communication with the listen device 20. In a first read operation service parameter records 110 are provided to the reader 10, which indicates that the authentication service 4 is available, and possibly what other services 3 are available on or by the listen device 20.

The reader 10 selects this authentication service 4, by writing the service select record 120 to the listen device 20. A part of the NDEF message 1 is copied from the non-volatile memory 22 to the volatile memory 21 as copy 5 and the volatile memory 21 is then overlaid over the non-volatile memory 22.

Once the listen device 20 confirms the validity of the service select record 120, it constructs a TNEP Status record 130 as an overlay on top of the volatile memory 21. This status record 130 is then provided in the subsequent read operation to the reader device 10.

The reader 10 performs a write operation with the service request record 140 including a cryptographic challenge for the authentication service 4. The listen device 20 stores the service request record 140 to the volatile memory 21 and starts the computation of the cryptographic response (called TResponse) on received cryptographic challenge using private key stored on the listen device 20.

The reader 10 retrieves the service response record 150 containing the TResponse. The TResponse is validated using a public key extracted from the listen device 20 certificate received as well within the service response record 150. Once the TResponse is validated then the listen device is declared as authentic.

The reader device 10, e.g. mobile phone, can as depicted in above example execute with the NFC Forum standard commands an authentication process using TNEP.

The solutions as described herein can be applied to authentication of consumables via NFC, e.g. RFID tags, for example for authenticating medical appliances, authenticating luxury products, authenticating accessories of appliances, etc. It further enables a connection handover from NFC protocol to other communication protocols, for example: Bluetooth, e.g. BLE, or wireless internet, e.g. WIFI.

It is noted that the features of methods as described herein can be implemented in devices as described herein, and vice versa. Also, the combination of features is possible for the accordingly other categories of aspects.

### LIST OF REFERENCE SIGNS

- 1: Initial NFC data exchange format, NDEF, message
- 2: NDEF records
- 3: Available services
- 4: Selected service
- 5: Copy of at least a part of the NDEF message

- 10: Reader device
- 20: Listen device
- 21: Volatile memory
- 22: Non-volatile memory
- 23: Finite State Machine

- 110: Service Parameter Record
- 120: Service Select Record
- 130: TNEP Status Record
- 140: Service Request Record
- 150: Service Response Record
- 160: Service Deselect Record

- 1000: Method of near field communication, NFC
- 1010: Providing Service Parameter Record
- 1020: Receiving Service Select Record
- 1030: Overlaying
- 1040: Writing Service Select Record
- 1050: Determining Validity of Service Select Record
- 1060: Providing Confirmation of Validity
- 1070: Receiving Service Request Record
- 1075: Determining Validity of Service Request Record
- 1080: Constructing Service Response Record
- 1090: Providing Service Response Record
- 1100: Receiving Service Deselect Record
- 1105: Determining Validity of Service Deselect Record
- 1110: Deactivating Overlaying

## Claims

1. A method (1000) of near field communication, NFC, for a listen device (20) with a volatile memory (21) and a non-volatile memory (22);
wherein the listen device (20) is configured to communicate with a reader device (10) through read operations comprising one or more read commands and write operations comprising one or more write commands;
wherein the non-volatile memory (22) comprises an initial NFC data exchange format, NDEF, message (1) having one or more NDEF records (2); and
wherein the method (1000) comprises:
providing (1010), in a first read operation, one or more of the NDEF records (2) as service parameter records (110) from the non-volatile memory (22) to the reader device (10), the service parameter records (110) comprising information about available services (3) of the listen device (20) based on the initial NDEF message (1);
producing (1020) a copy (5) of at least a part of the initial NDEF message (1) from the non-volatile memory (22) to the volatile memory (21); and
overlaying (1030) the copy (5) in the volatile memory (21) over the initial NDEF message (1) in the non-volatile memory (22), such that subsequent read operations from the reader device (10) read data from the copy (5) in the volatile memory (21), and subsequent write operations from the reader device (10) write data to the copy (5) in the volatile memory (21).

2. The method (1000) of claim 1, further comprising at least one of the following features:
in response to receiving, from the reader device (10), a complete first write command comprising at least a part of a service select record (120), writing (1040) the part of the service select record (120) to the volatile memory (21); and
writing (1040) the full service select record (120) to the volatile memory (21) in response to receiving, from the reader device (10), one or more subsequent write commands;
in response to writing (1040) the full service select record (120) to the volatile memory (21), determining (1050) the validity of the full service select record (120);
in response to determining (1050) the validity of the full service select record (120), providing (1060) confirmation of the validity of the service select record (120), in a subsequent read operation, to the reader device (10) as a TNEP status record (130);
receiving (1070), in one or more subsequent write operations to the volatile memory (21), a service request record (140) for a selected service (4) from the reader device (10);
constructing (1080) a service response record (150) based on at least the service request record (140); and
providing (1090), in one or more subsequent read operations, the service response record (150) to the reader device (10).

3. The method (1000) of claim 2, further comprising at least one of the following features:
wherein providing (1060) confirmation of the validity of the service select record (120) is performed by copying the TNEP status record (130) to the volatile memory;
wherein providing (1060) confirmation of the validity of the service select record (120) is performed by providing the TNEP status record (130) to the read operation as another overlay layer over the volatile memory (21);
wherein providing (1090) the service response record (150) is performed by copying the service response record (150) to the volatile memory; and
wherein providing (1090) the service response record (150) is performed by providing the service response record (150) to the read operation as another overlay layer over the volatile memory (21).

4. The method (1000) of any one of claims 1 to 3, further comprising receiving (1100) in one of the subsequent write operations, a service deselect record (160) from the reader device (10); and, in response to receiving the service deselect record (160), deactivating (1110) the overlying of the volatile memory (21) over the initial NDEF message (1) in the non-volatile memory (22).

5. The method (1000) of any one of claims 2, 3 or 4, further comprising validating (1075, 1105) at least one of the received service request record (140) and the service deselect record (160) by comparing the service request record (140) or the service deselect record (160) with other data stored in the volatile memory (22) or in the non-volatile memory (21).

6. The method (1000) of any one of claims 2 to 5, wherein writing one or more of the write commands at least partly overwrite the contents of the volatile memory (21).

7. A listen device (20) for near field communication, NFC, with a reader device (10) through read operations comprising one or more read commands and write operations comprising one or more write commands, the listen device (20) comprising:
a volatile memory (21);
a non-volatile memory (22) comprising an initial NFC data exchange format, NDEF, message (1) having one or more NDEF records (2); and
a finite state machine, FSM, (23);
wherein the listen device (20) is configured to
provide, in a first read operation, one or more of the NDEF records (2) as service parameter records (110) from the non-volatile memory (22) to the reader device (10), the service parameter records (110) comprising information about available services (3) of the listen device (20) based on the initial NDEF message (1);
produce a copy (5) of at least a part of the initial NDEF message (1) from the non-volatile memory (22) to the volatile memory (21); and
overlay the copy (5) in the volatile memory (21) over the initial NDEF message (1) in the non-volatile memory (22), such that subsequent read operations from the reader device (10) read data from the copy (5) in the volatile memory (21), and subsequent write operations from the reader device (10) write data to the copy (5) in the volatile memory (21).

8. The listen device (20) of claim 7, further configured to at least one of the following features:
in response to receiving, from the reader device (10), a complete first write command comprising at least a part of a service select record (120), write the part of the service select record (120) to the volatile memory (21); and
write the full service select record (120) to the volatile memory (21) in response to receiving, from the reader device (10) one or more subsequent write commands;
in response to writing the full service select record (120) to the volatile memory (21), determine the validity of the full service select record (120);
in response to determining the validity of the full service select record (120), provide confirmation of the validity of the service select record (120), in a subsequent read operation, to the reader device (10) as a TNEP status record (130);
receive, in one or more subsequent write operations to the volatile memory (21), a service request record (140) for the selected service (4) from the reader device (10);
construct a service response record (150) based on at least the service request record (140); and
provide, in one or more subsequent read operations, the service response record (150) to the reader device (10).

9. The listen device (20) of claim 8, further configured to at least one of the following features:
provide confirmation of the validity of the service select record (120) by copying the TNEP status record (130) to the volatile memory;
wherein providing (1060) confirmation of the validity of the service select record (120) is performed by providing the TNEP status record (130) to the read operation as another overlay layer over the volatile memory (21);
provide the service response record (150) by copying the service response record (150) to the volatile memory; and
wherein providing (1090) the service response record (150) is performed by providing the service response record (150) to the read operation as another overlay layer over the volatile memory (21).

10. The listen device (20) of any one of claims 7 to 9, further configured to receive in one of the subsequent write operations, a service deselect record (160) from the reader device (10); and, in response to receiving the service deselect record (160), to deactivate the overlying of the volatile memory (21) over the initial NDEF message (1) in the non-volatile memory (22).

11. The listen device (20) of any one of claims 8, 9 or 10, further configured to compare at least one of the service request record (140) and the service deselect record (160) with other data stored in the volatile memory (22), in the non-volatile memory (21) or in the finite state machined (23), thereby to validate the received service request record (140) or the service deselect record (160).

12. The listen device (20) of any one of claims 8 to 11, further configured to at least partly overwrite the contents of the volatile memory (21) when executing one or more of the write commands.

13. The listen device (20) of any one of claims 7 to 12, configured to change the context of the FSM based on the contents of the volatile memory (21).

14. The listen device (20) of claim 13, configured to change the context of the FSM only based on validated contents of the volatile memory (21).

15. A non-transitory computer-readable storage medium having stored thereon instructions that, when executed by at least one processor of a computer system, cause the processor to program a listen device (20) in communication with the computer system into a configuration that enables the listen device (20) to carry out the method (1000) of any one of claims 1 to 6.

## Amended claims

### Amended claims in accordance with Rule 137(2) EPC.

1. A method (1000) of near field communication, NFC, for a listen device (20) with a non-volatile memory (22);
wherein the listen device (20) is configured to communicate with a reader device (10) through read operations comprising one or more read commands and write operations comprising one or more write commands;
wherein the non-volatile memory (22) comprises an initial NFC data exchange format, NDEF, message (1) having one or more NDEF records (2); and
**characterized in that** the method (1000) comprises:
providing (1010), in a first read operation, one or more of the NDEF records (2) as service parameter records (110) from the non-volatile memory (22) to the reader device (10), the service parameter records (110) comprising information about available services (3) of the listen device (20) based on the initial NDEF message (1);
producing (1020) a copy (5) of at least a part of the initial NDEF message (1) from the non-volatile memory (22) to a volatile memory (21) included in the listen device (20); and
overlaying (1030) the copy (5) in the volatile memory (21) over the initial NDEF message (1) in the non-volatile memory (22), such that subsequent read operations from the reader device (10) read data from the copy (5) in the volatile memory (21), and subsequent write operations from the reader device (10) write data to the copy (5) in the volatile memory (21).

2. The method (1000) of claim 1, further comprising at least one of the following features:
in response to receiving, from the reader device (10), a complete first write command comprising at least a part of a service select record (120), writing (1040) the part of the service select record (120) to the volatile memory (21); and
writing (1040) the full service select record (120) to the volatile memory (21) in response to receiving, from the reader device (10), one or more subsequent write commands;
in response to writing (1040) the full service select record (120) to the volatile memory (21), determining (1050) the validity of the full service select record (120);
in response to determining (1050) the validity of the full service select record (120), providing (1060) confirmation of the validity of the service select record (120), in a subsequent read operation, to the reader device (10) as a TNEP status record (130);
receiving (1070), in one or more subsequent write operations to the volatile memory (21), a service request record (140) for a selected service (4) from the reader device (10);
constructing (1080) a service response record (150) based on at least the service request record (140); and
providing (1090), in one or more subsequent read operations, the service response record (150) to the reader device (10).

3. The method (1000) of claim 2, further comprising at least one of the following features:
wherein providing (1060) confirmation of the validity of the service select record (120) is performed by copying the TNEP status record (130) to the volatile memory;
wherein providing (1060) confirmation of the validity of the service select record (120) is performed by providing the TNEP status record (130) to the read operation as another overlay layer over the volatile memory (21);
wherein providing (1090) the service response record (150) is performed by copying the service response record (150) to the volatile memory; and
wherein providing (1090) the service response record (150) is performed by providing the service response record (150) to the read operation as another overlay layer over the volatile memory (21).

4. The method (1000) of any one of claims 1 to 3, further comprising receiving (1100) in one of the subsequent write operations, a service deselect record (160) from the reader device (10); and, in response to receiving the service deselect record (160), deactivating (1110) the overlying of the volatile memory (21) over the initial NDEF message (1) in the non-volatile memory (22).

5. The method (1000) of any one of claims 2, 3 or 4, further comprising validating (1075, 1105) at least one of the received service request record (140) and the service deselect record (160) by comparing the service request record (140) or the service deselect record (160) with other data stored in the volatile memory (22) or in the non-volatile memory (21).

6. The method (1000) of any one of claims 2 to 5, wherein writing one or more of the write commands at least partly overwrite the contents of the volatile memory (21).

7. A listen device (20) for near field communication, NFC, with a reader device (10) through read operations comprising one or more read commands and write operations comprising one or more write commands, the listen device (20) comprising:
a non-volatile memory (22) comprising an initial NFC data exchange format, NDEF, message (1) having one or more NDEF records (2);
**characterized in that** the listen device (20) further comprises a finite state machine, FSM, (23) and a volatile memory (21);
wherein the listen device (20) is configured to
provide, in a first read operation, one or more of the NDEF records (2) as service parameter records (110) from the non-volatile memory (22) to the reader device (10), the service parameter records (110) comprising information about available services (3) of the listen device (20) based on the initial NDEF message (1);
produce a copy (5) of at least a part of the initial NDEF message (1) from the non-volatile memory (22) to the volatile memory (21); and
overlay the copy (5) in the volatile memory (21) over the initial NDEF message (1) in the non-volatile memory (22), such that subsequent read operations from the reader device (10) read data from the copy (5) in the volatile memory (21), and subsequent write operations from the reader device (10) write data to the copy (5) in the volatile memory (21).

8. The listen device (20) of claim 7, further configured to at least one of the following features:
in response to receiving, from the reader device (10), a complete first write command comprising at least a part of a service select record (120), write the part of the service select record (120) to the volatile memory (21); and
write the full service select record (120) to the volatile memory (21) in response to receiving, from the reader device (10) one or more subsequent write commands;
in response to writing the full service select record (120) to the volatile memory (21), determine the validity of the full service select record (120);
in response to determining the validity of the full service select record (120), provide confirmation of the validity of the service select record (120), in a subsequent read operation, to the reader device (10) as a TNEP status record (130);
receive, in one or more subsequent write operations to the volatile memory (21), a service request record (140) for the selected service (4) from the reader device (10);
construct a service response record (150) based on at least the service request record (140); and
provide, in one or more subsequent read operations, the service response record (150) to the reader device (10).

9. The listen device (20) of claim 8, further configured to at least one of the following features:
provide confirmation of the validity of the service select record (120) by copying the TNEP status record (130) to the volatile memory;
wherein providing (1060) confirmation of the validity of the service select record (120) is performed by providing the TNEP status record (130) to the read operation as another overlay layer over the volatile memory (21);
provide the service response record (150) by copying the service response record (150) to the volatile memory; and
wherein providing (1090) the service response record (150) is performed by providing the service response record (150) to the read operation as another overlay layer over the volatile memory (21).

10. The listen device (20) of any one of claims 7 to 9, further configured to receive in one of the subsequent write operations, a service deselect record (160) from the reader device (10); and, in response to receiving the service deselect record (160), to deactivate the overlying of the volatile memory (21) over the initial NDEF message (1) in the non-volatile memory (22).

11. The listen device (20) of any one of claims 8, 9 or 10, further configured to compare at least one of the service request record (140) and the service deselect record (160) with other data stored in the volatile memory (22), in the non-volatile memory (21) or in the finite state machine (23), thereby to validate the received service request record (140) or the service deselect record (160).

12. The listen device (20) of any one of claims 8 to **11,** further configured to at least partly overwrite the contents of the volatile memory (21) when executing one or more of the write commands.

13. The listen device (20) of any one of claims 7 to 12, configured to change the context of the FSM based on the contents of the volatile memory (21).

14. The listen device (20) of claim 13, configured to change the context of the FSM only based on validated contents of the volatile memory (21).

15. A non-transitory computer-readable storage medium having stored thereon instructions that, when executed by at least one processor of the listen device (20) of claim 7, cause said listen device (20) to carry out the method (1000) of any one of claims 1 to 6.
